# EUROPEAN PATENT APPLICATION

(11) **EP 4 390 458 A1**
(43) Date of publication of application: **26.06.2024**
(21) Application number: 22216132.5
(22) Date of filing: 22.12.2022
(51) Int. Cl.: G01S 13/931, G01S 13/00, G01S 13/46

(54) **A COMPUTER-IMPLEMENTED METHOD FOR DETECTING AN OBJECT IN THE SURROUNDINGS OF A VEHICLE, DETECTOR SYSTEM, VEHICLE, USE OF A DETECTOR SYSTEM, TRAFFIC SYSTEM, COMPUTER PROGRAM AND COMPUTER-READABLE STORAGE MEDIUM**

(71) Applicant: Volvo Car Corporation, 405 31 Göteborg (SE)
(72) Inventor: ORBAY, Raik, 40531 Göteborg (SE); MEINEN, Niklaus, 40531 Göteborg (SE)
(74) Representative: Maiwald GmbH

(57) **Abstract**

The disclosure relates to a computer-implemented method for detecting an object (130) in the surroundings of a vehicle (110) having a detector array (240) configured for detecting an electromagnetic signal and being transmitter-free. According to the method, at least one electromagnetic signal having at least one first signal characteristic is received (S1) at the detector array (240) for a time span. The signal emanates from at least one stationary sender and/or from at least one illuminator vehicle. Subsequently, a presence or absence of the object (130) is determined based on an evolution of the at least one first signal characteristic over the time span (S2). Moreover, a detector system (230) for detecting an object (130) in the surroundings of a vehicle (110) is presented. Furthermore, a vehicle (110) comprising the detector system (230) is described. Additionally, the use of a detector system (230) and a traffic system (100) is explained. Also, a computer program (360) and a computer-readable storage medium (350) are shown.

## Description

The present disclosure relates to a computer-implemented method for detecting an object in the surroundings of a vehicle.

The present disclosure is further directed to a detector system for detecting an object in the surroundings of a vehicle, a vehicle, a use of such a detector system, and a traffic system.

Additionally, the present disclosure relates to a computer program and a computer-readable storage medium.

Detecting objects in the surroundings of a vehicle is relevant for fully or partially autonomous vehicles. Such vehicles need to be able to detect objects in their surroundings in order to avoid collisions with such objects. The same applies to vehicles being driven by a human driver and being equipped with a driver assistance system helping the driver to detect objects in the surroundings of the vehicle and/or supporting the driver in reacting appropriately to such objects. In this context, radar systems, lidar systems and/or optical camera systems may be used.

It goes without saying that systems for detecting objects in the surroundings of a vehicle consume energy. Consequently, an appropriate tradeoff between energy consumption and sufficient detection accuracy has to be found for each such system.

It is therefore an objective of the present disclosure to solve or alleviate the above-mentioned conflict of obj ectives. In other words, a way to detect objects in the surroundings of a vehicle shall be provided, wherein this way shall be energy efficient and sufficiently accurate at the same time.

The problem is at least partially solved or alleviated by the subject matter of the independent claims of the present disclosure, wherein further examples are incorporated in the dependent claims.

According to a first aspect, there is provided a computer-implemented method for detecting an object in the surroundings of a vehicle having a detector array configured for detecting an electromagnetic signal and being transmitter-free. The method comprises the steps of
- receiving at least one electromagnetic signal emanating from at least one stationary sender and/or from at least one illuminator vehicle and having at least one first signal characteristic at the detector array for a time span, and
- determining a presence or absence of the object based on an evolution of the at least one first signal characteristic over the time span.

It is noted that in the present method, the electromagnetic signal is not sent by the vehicle or a system of the vehicle. In other words, electromagnetic signals which are already present in the surroundings of the vehicle are used in order to detect the object. Consequently, the detector array may be designated as a passive detector array and the method may be designated as a method for passively detecting an object. This has the effect that detecting the object consumes comparatively little energy. Therefore, emissions in general and specifically a CO2 footprint of the detection of objects in the surrounding of a vehicle are comparatively small. At the same time, due to the omnipresence of electromagnetic signals in the surroundings of a vehicle, objects may be detected with sufficient accuracy.

More generally speaking, the present disclosure suggests utilizing the content of the ambient signal spectrum, especially in an urban scenario. This has the effect that the amount and complexity of sensors in a vehicle can be reduced. Illuminating hardware may be dismissed, especially in efficient, lightweight, small city vehicles.

The illuminator vehicle and the stationary sender may be designated as illuminators of opportunity.

In this context, the term "detecting" is to be understood as any measure to determine, estimate, or indicate the presence of an object. Based on a detected presence of an object a distance between the detector array and the object and/or a relative velocity of the object with respect to the detector array may be determined. Based on the determined distance and/or the determined relative velocity, the object in the surrounding of the vehicle may be tracked.

An object may be any device, subject and/or matter, which can be in the surrounding of a vehicle. For instance, the object may be an obstacle having a fixed location such as a wall or a building or a road barrier, or a moving obstacle, such as a cyclists, a person, an element of fauna or another vehicle of any kind.

A sender is to be understood as a producer of an electromagnetic signal. The sender can also be called a signal sender or an illuminator.

The term "surroundings of a vehicle" as used herein is to be understood as an environment of the vehicle. The surroundings of the vehicle may be a range around the vehicle which extends from an outer surface of the vehicle up to a radius of several meters, several ten meters or several hundred meters, e.g. 500 meters. The range around the vehicle may have a circular shape, an oval shape, a square shape, a rectangular shape, or any other polygonal shape such as hexagonal or octagonal shape. The surroundings may as well relate to a 3D domain like a semi-sphere or a cone.

The detector array as used herein is to be understood as any arrangement of one or more detector elements, in particular sensors for detecting electromagnetic signals. The one or more detector elements may be configured to detect electromagnetic signals of the same type or of different type. The detector array may be one component or may include a plurality of components, e.g. detector elements, being arranged at different locations of the vehicle, wherein the plurality of detector elements are directly or indirectly communicatively coupled to each other. The detector array may be arranged at any position on the vehicle at which an electromagnetic signal can be detected. For instance, the detector array may be arranged at the front of the vehicle e.g. at the front bumper, at the rear of the vehicle, e.g. at the rear bumper, at a side of the vehicle or on a roof of the vehicle. In a case in which the detector array comprises a plurality of detector elements, also combinations of these locations are possible.

The electromagnetic signal may be a periodic signal, a symmetric signal, an asymmetric signal, a synchronous signal, an asynchronous signal, or a non-periodic signal, but is not limited thereto.

In an example, receiving at least one electromagnetic signal comprises performing a scanning procedure. During a scanning procedure, a field of detection of the detector array is swept along vertical and/or horizontal and/or diagonal scanning lines. The scan may be continuous or non-continuous, e.g. intermittent. During the movement of the detector array, the detector array may continuously or non-continuously sense, measure and/or search for an electromagnetic signal.

The term "transmitter free" is to be understood in that the vehicle may not comprise a transmitter or in that the vehicle may comprise at least one transmitter being not used. This applies to a transmitter corresponding to the electromagnetic signal being received when performing the method according to the present disclosure. Of course, the vehicle may have and use transmitters for other functionalities. In other words, the received at least one electromagnetic signal is emitted by a transmitter being located at a different position, e.g. other vehicle, than the vehicle of the present disclosure.

The time span represents a time range, during which the at least one electromagnetic signal is received. For instance, the time range may be 0 to 5 seconds, but is not limited thereto. In an example, the time span is 1 second.

The evolution of the at least one first signal characteristic relates to a development of the at least one first signal characteristic over time. This means that an increase or a decrease is assessed. Moreover, the first signal characteristic may be found to be constant over the time span or over a portion of the time span. As will be explained in more detail further below, the evolution may relate to a change in the frequency, a change in the polarization and/or a change in a directional angle of the received electromagnetic signal.

In an example, the at least one electromagnetic signal may have more than one first signal characteristic, e.g. two first signal characteristics or three first signal characteristics. In such a case, each of the first signal characteristics may evolve over the time span. The accuracy of the determination of the presence of the object may, thus, be increased.

According to an example of the method, the at least one electromagnetic signal is a radar signal, a LIDAR signal, a mobile telephone communication signal, a video broadcasting signal, a position signal, a WIFI signal or an audio broadcasting signal. The video broadcasting signal may be an analog television signal, a digital television signal or a terrestrial television signal. The mobile telephone communication signal may be a cellular phone base station signal or a satellite signal. The audio broadcasting signal may be an analog audio broadcasting signal like a FM radio signal or an AM radio signal or a digital audio broadcasting signal. The position signal may be a GPS signal or a GALILEO signal or a GLONASS signal or a Beidou signal or a QZSS signal. The position signal may be a satellite signal. All of the mentioned signal types are usually present in the surroundings of a vehicle even in a case in which the vehicle or a system thereof does not emit such signals. Since any one of these signals is reflected and/or refracted by objects in the surroundings of the vehicle, these signals can be used in order to detect objects. Thus, objects can be detected in an energy efficient and accurate manner without producing electromagnetic waves.

According to an example of the method, the at least one first characteristic of the at least one electromagnetic signal is a wavelength, a polarization, a signal strength, an autocorrelation, a cross-correlation, a frequency, an amplitude, a phase, a signal history or a travel time information. The presence or absence of the object may be determined based on these signal characteristics using methods which are known as such. For example, methods for determining the presence or absence of an object based on travel time information and/ or a frequency are known from the fields of radar.

According to an example of the method, the method further comprises receiving at least two different electromagnetic signals at the detector array for a time span, wherein each electromagnetic signal has at least one first signal characteristic, and determining a presence or absence of the object based on an evolution of the at least one first signal characteristics of each of the at least two electromagnetic signals received over the time span. By receiving and processing at least two different electromagnetic signals, i.e. signals of the abundance of signals available in the surroundings of the vehicle, e.g. in an urban traffic scenario, an object may be detected with increased accuracy. The different electromagnetic signals may differ in wavelength, signal frequency, polarization, intensity and/or cycles/periods. Thus, a receipt and an extraction of information from more than two different signals is possible. Therefore, a robust and accurate detection of an object in the surroundings of a vehicle can be provided. Due to the different nature of the electromagnetic signals, this may be called a sensor fusion technique. It is noted that the at least two different electromagnetic signals may be received at a single sensor or at at least two distinct sensors.

According to an example of the method, the method further receiving a location information of a sender of the at least one electromagnetic signal, and determining the presence or absence of the object based on the location information. The location information may be received in the form of a 3D map or a simple look-up table comprising global positions of commercial senders. Thus, a location of the sender is known. This facilitates the detection of an object based on reflection and refraction of the already available electromagnetic signal. Additionally or alternatively the detection accuracy may be increased. At the same time, very little emissions, such as CO2 emissions, are produced. The sender may be a transmitter. In an example, the sender comprises an antenna. In this context, the term "location information of the sender" as user herein is to be understood as any information respectively data indicating the geographical position of the sender of the at least one electromagnetic signal. The geographical position may be two-dimensional (e.g. latitude and longitude) or three-dimensional (e.g. latitude, longitude, and height above sea level). For instance, the location information may include the geographical position of solely one sender or a plurality of same senders or different senders. Same senders may emit all electromagnetic signals of the same type. Different senders may emit electromagnetic signals of different types, e.g. with respect to wavelength, frequency, amplitude, phase, polarization or travel time information. The sender may be stationary or mobile, in particular moving. The location information may be provided as a list, a table or a map. By knowing the location, in particular the geographical location/position, of the sender, the energy consumption of the detection can be decreased and the determination of the presence or absence of the object can be made more accurate because the sender may be used as a fix or moving reference point.

According to an example of the method, the method further comprises receiving a second signal characteristic of the at least one electromagnetic signal describing a characteristic of the electromagnetic signal at the sender, and determining the presence or absence of the object based on the second signal characteristic. In other words, the second signal characteristic describes a characteristic of the electromagnetic signal when being emitted by the sender. As before, sender is to be understood as a producer of an electromagnetic signal. The sender can also be called a signal sender or an illuminator. The second signal characteristic can be used as a reference when assessing the evolution of the first signal characteristic over the time span. By knowing and considering the second signal characteristic, the determination of the presence or absence of the object can be made more accurate.

According to an example of the method, the at least one second characteristic of the at least one electromagnetic signal is a wavelength, a polarization, a signal strength, an autocorrelation, a cross-correlation, a frequency, an amplitude, a phase, a signal history or a travel time information. By specifying the at least one second characteristic, the determination of the presence or absence of the object can be made more accurate.

According to an example of the method, the method further comprises receiving an environmental parameter indicating an environmental condition having an effect on the at least one electromagnetic signal and determining the presence or absence of the object further based on the environmental parameter. The environmental effect may relate to an attenuation characteristic being due to a weather phenomenon, natural phenomenon and/or human induced phenomenon in the environment. Examples of a weather phenomenon may be fog, dust, rainfall, or snowfall. These phenomena have an influence on the refraction of the electromagnetic signal in the surroundings of the vehicle. A natural phenomenon may relate to dust of soil aerosol particles induced by soil erosion. Human induced phenomena may be dust and/or fog consisting of aerosol particles induced by humans like air pollution and smog. The environmental parameter may be provided by at least one environmental detector array being arranged at and/or in the vehicle, by other vehicles, by private services and/or public services (e.g. weather services). The environmental parameter may be received by the vehicle by a respective environmental parameter receiving unit. By knowing and considering the environmental parameter, the determination of the presence or absence of the object can be made more accurate.

According to an example of the method, the method further comprises ignoring the electromagnetic signal, if it is received on a direct path between the detector array and the sender. This may be done using a filter arrangement which may be formed as a software filter arrangement or a hardware filter arrangement. In this case, the location of the sender needs to be known. Consequently, the position of the sender does not need to be determined using the electromagnetic signal. Thus, by ignoring electromagnetic signals on the direct path, the detection of objects other than the sender is enhanced. Moreover, undesired interferences and/or signal overload can be filtered out. Therefore, the determination of the presence or absence of the object can be made more accurate. Ignoring the electromagnetic signal, if it is received on a direct path between the detector array and the sender may also be called direct-path interference mitigation.

According to an example of the method, the method further comprises receiving object data from another vehicle, the object data indicating a determined presence or absence of the object. A presence or absence of the object may be determined based on the object data received from the other vehicle. The object data may be any data indicating the presence or absence of an object. For instance, the object data may include data indicating the geographical position and/or the size of the object and/or attenuation characteristics of the object. The object data may be provided by at least one other vehicle using a method according to the present disclosure. By knowing and considering object data indicating the determined presence or absence of an object, the determination of the presence or absence of the object can be made more accurate. Alternatively or additionally, the method further comprises providing object data indicating a determined presence or absence of the object to at least one other vehicle. By providing respectively informing at least one other vehicle, the knowledge about the presence or absence of an object can be announced.

According to a further example, the method is executed if a sufficient amount of electromagnetic signals and/or at least one electromagnetic signal having a signal strength exceeding a predefined signal strength threshold is received. Otherwise, the method is abandoned. In the latter case, other systems and/or methods for detecting objects in the surroundings of the vehicle may be used. Consequently, it is ensured that the method according to the present disclosure is only performed in situations where an accurate detection of objects in the surroundings of the vehicle may be achieved.

According to a further example, the method is executed in a predefined area only, such as an urban area. In such an area a sufficient amount of electromagnetic signals is present. Otherwise, the method is abandoned. In the latter case, other systems and/or methods for detecting objects in the surroundings of the vehicle may be used. Consequently, it is ensured that the method according to the present disclosure is only performed in situations where an accurate detection of objects in the surroundings of the vehicle may be achieved.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a centralized, decentralized or distributed computer system. The data processing means or the computer, respectively, may comprise one or more of a processor, a memory, a data interface, a data storage or the like.

According to a second aspect, there is provided a detector system for detecting an object in the surroundings of a vehicle. The detector system comprises a detector array configured for detecting an electromagnetic signal having at least one first signal characteristic, and a data processing unit being configured for determining a presence or absence of the object based on an evolution of the at least one first signal characteristic over the time span. The detector array and the data processing unit are communicatively connected and the detector system is transmitter-free. The data processing unit may be a centralized or decentralized computing system. In case the data processing unit is a centralized computing system, all performed determinations of the data processing unit are executed at one location, e.g. at or in the vehicle, at or in another vehicle, at the vehicle manufacturer or at a respective service provider. In case the data processing unit is a decentralized computing system, all performed determinations of the data processing unit are executed at least at two different locations, e.g. at or in a plurality of different vehicles, at a plurality of vehicle manufacturers or at a plurality of respective service providers. Using such a detector system, the energy consumption of the detection of an object in the surroundings of a vehicle can be small. At the same time objects in the surroundings of the vehicle may be determined with sufficient accuracy. Furthermore, such a detector system is structurally very simple. Consequently, a vehicle or a vehicle platform which uses such a detector system may also be structurally simple. This also enhances recyclability of such components.

According to a third aspect, there is provided a vehicle comprising a detector system according to the present disclosure. Consequently, the vehicle is able to detect objects in its surroundings in an accurate and energy-efficient manner.

According to a fourth aspect, there is provided a use of a detector system according to the present disclosure in a vehicle. Using such a detector system, objects may be detected in an accurate and energy-efficient manner.

According to a fifth aspect, there is provided a traffic system. The traffic system comprises at least one illuminator vehicle comprising a sender being configured to emit at least one electromagnetic signal and/or at least one stationary sender being configured to emit at least one electromagnetic signal. Additionally, the traffic system comprises at least one vehicle according to the present disclosure. Thus, electromagnetic signals are only emitted by the illuminator vehicle and/or the stationary sender. In contrast thereto, the vehicle according to the present disclosure does not emit electromagnetic signals. This has the effect that objects may be detected in an accurate and energy-efficient manner.

According to a sixth aspect, there is provided a computer program comprising instructions which, when the program is executed by a computer, cause the computer to carry out the method according to the present disclosure. Using the computer program, objects may be detected in an accurate and energy-efficient manner. Based thereon, the objects may be classified and motion-predicted.

According to a seventh aspect, there is provided a computer-readable storage medium comprising instructions which, when executed by a computer, cause the computer to carry out the method according to the present disclosure. Also by the computer-readable storage medium, objects may be detected in an accurate and energy-efficient manner. The computer-readably storage medium may form part of a cloud storage system.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Fig. 1: shows a traffic system illustrated in bird's eye perspective;
- Fig. 2: illustrates a vehicle according to the present disclosure being equipped with a detection system according to the present disclosure, a computer-readable storage medium according to the present disclosure and a computer program according to the present disclosure;
- Fig. 3: illustrates the data processing apparatus of the detection system of Figure 2 in more detail; and
- Fig. 4: illustrates steps of a computer-implemented method for detecting an object in the surroundings of a vehicle.

The Figures are merely schematic representations and serve only to illustrate examples of the disclosure. Identical or equivalent elements are in principle provided with the same reference signs.

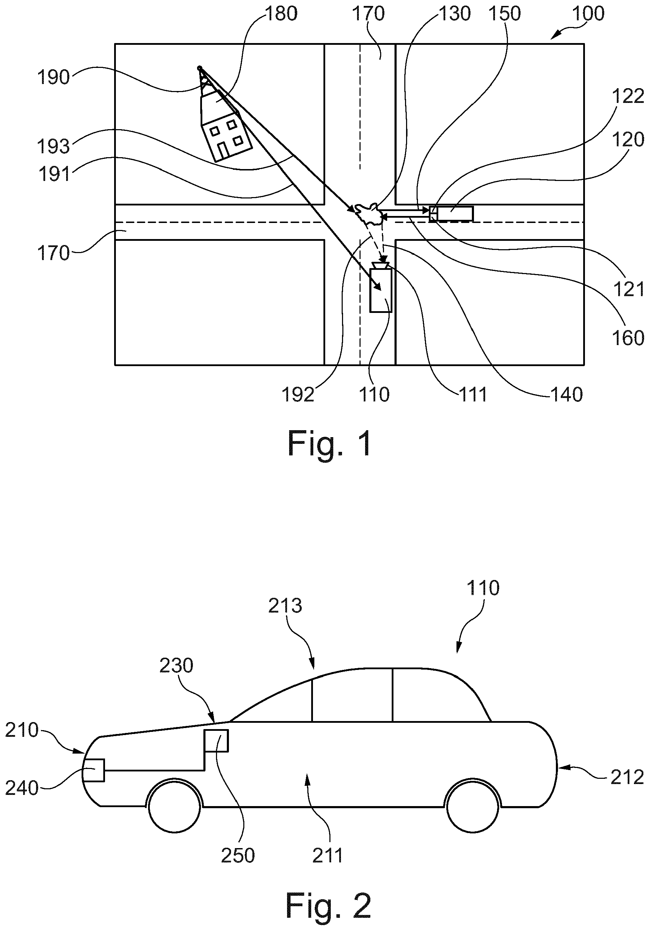

Figure 1 shows a traffic system in bird's eye perspective. On common streets or crossroads, it might be possible that an object 130 has been lost by a vehicle due to speed, steering movement and/or turning processes. The object 130 represented in Figure 1 is a large stone which lies in the middle of a crossroads, i.e. at the crossing point of the two crossing streets 170.

An illuminator vehicle 120 drives on one of these two crossing streets 170. In the example shown in Figure 1, the illuminator vehicle 120 drives on the street 170 extending from the left side to the right side of the Figure. More precisely, the illuminator vehicle 120 drives from the right side of the Figure towards the left side of the Figure.

The illuminator vehicle 120 is configured to detect the object 130 using an active detection system. This means that the illuminator vehicle 120 emits or sends out at least one electromagnetic signal 160 by a transmitting unit 121. In the example shown in Figure 1, the electromagnetic signal 160 is sent out in a forward driving direction, i.e. in a direction from the right side of the Figure towards the left side of the Figure.

The electromagnetic signal 160 is a radar signal having a standardized frequency. The electromagnetic signal 160 hits an outer surface of the object 130 and is reflected. The reflected electromagnetic signal is denoted 150. It is received by a receiving unit 122.

Both of the transmitting unit 121 and the receiving unit 122 are arranged in the illuminator vehicle 120. Based on the reflection and the run-time difference of the reflected electromagnetic signal 150 and the sent electromagnetic signal 160, the presence or absence of the object 130 may be detected. Moreover, a distance between the illuminator vehicle 120 and the object 130 can be estimated. In other words, determining the presence or absence of the object 130 comprises a run-time analysis of the electromagnetic signals 150 and 160.

Another vehicle 110 is travelling on the street 170 extending from a bottom side of Figure 1 to a top side of Figure 1. The vehicle 110 is travelling in a direction from the bottom side of Figure 1 towards a top side of Figure 1.

The vehicle 110 comprises a detector system 230 and may execute a computer-implemented method for detecting an object in the surroundings of the vehicle 110.

The detector system 230 comprises a detector array and a data processing unit being communicatively connected thereto. The data processing unit is configured to carry out the method for detecting an object in the surroundings of the vehicle.

When performing the method, the object 130 may be detected in a passive manner. The object 130 is illuminated by illuminator vehicle 120.

In the present example, the outer surface of the object 130 is not a perfect reflector such that besides the reflected electromagnetic signal 150, also an electromagnetic signal 140 is reflected. It is noted that the directions of the reflected electromagnetic signals 150, 140 have been chosen in a purely illustrative manner.

Thus, at the vehicle 110, the reflected electromagnetic signals 140 may be received by a receiving unit 111. The receiving unit 111 is arranged on the vehicle 110 and forms part of the detector system 230.

It is emphasized that the reflected electromagnetic signal 140 originates from the electromagnetic signal 160 sent out by the illuminator vehicle 120. Nevertheless, using the receiving unit 111 of the detector system 230 a timely evolution in the frequency of the reflected electromagnetic signal 140 over a time span may be observed. Moreover, a timely evolution of a phase between different signal portions of the reflected electromagnetic signal 140 may be observed. In a more general manner, the frequency and the phase may be summarized as a first signal characteristic. Based thereon, the presence or absence of the object 130 may be determined.

The traffic system 100 further comprises a stationary sender 190 which is arranged on a roof top of a house 180. The stationary sender 190 transmits a TV broadcasting signal having a standardized signal strength and a standardized frequency when being sent.

In the present example, the location of the stationary sender 190 is known and the standardized signal strength and the standardized frequency at which the TV broadcasting signal is sent, is also known.

The stationary sender 190 transmits the TV broadcasting signal in the surroundings of the vehicle 110.

The TV broadcasting signal is an electromagnetic signal being sent into a plurality of directions or certain lobe axes as known through a related polar plot. This is illustrated by electromagnetic signals 191 and 193 being sent into different directions from the stationary sender 190.

The electromagnetic signal 191 is sent on a direct path between the stationary sender 190 and the vehicle 110.

The electromagnetic signal 193 is sent towards the object 130 and is reflected at the object 130.

A portion of the reflected signal is designated as electromagnetic signal 192. The electromagnetic signal 192 is received at the receiving unit 111 of the detector system 230.

Since the location of the stationary sender 190 is known, the electromagnetic signal 191 is ignored.

As before, an evolution of the received signal strength and/or the frequency of the reflected electromagnetic signal 192 at the receiving unit 111 may be analyzed over a time span. Based thereon, the presence or absence of the object 130 is detected.

Figure 2 illustrates the vehicle 110 in more detail.

The vehicle 110 comprises a front 210, sides 211, a roof 213, and a rear 212.

The vehicle 110 further comprises a detector system 230. The detector system 230 comprises a detector array 240 and a data processing apparatus 250.

In the present example, the detector array 240 is arranged in the front bumper of the vehicle 110.

It is understood that the detector array 240 may as well be arranged at another location of the vehicle 110.

Moreover, the detector array 240 comprises a radar receiver and a receiver for TV broadcasting signals.

The detector array 240 is communicatively coupled to the data processing apparatus 250.

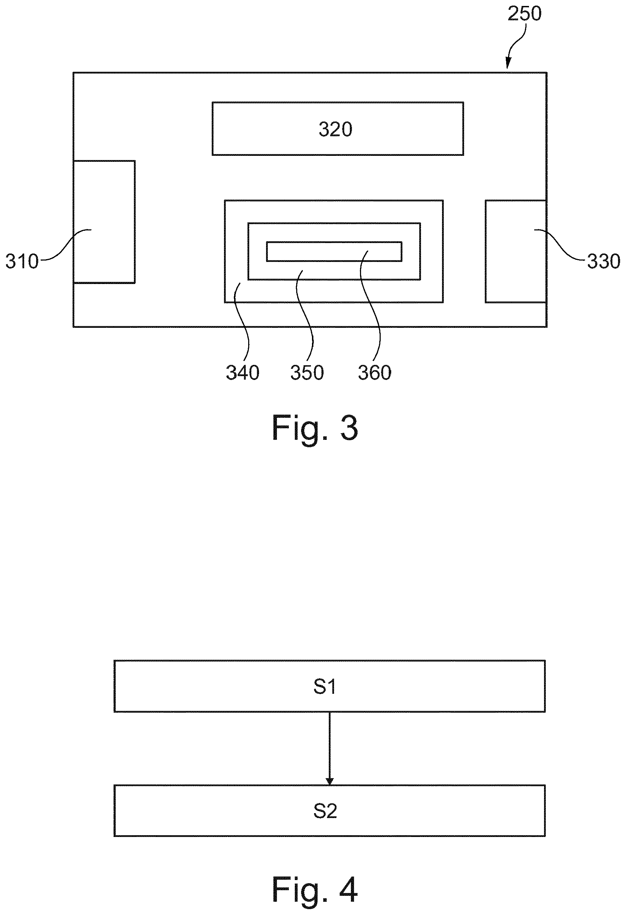

Figure 3 illustrates a data processing apparatus 250 in more detail.

The data processing apparatus 250 comprises a receiving unit 310 for receiving the detection data provided by the detector array 240. Further, the data processing apparatus 250 comprises a determination unit 320 for determining a presence or absence of the object 130 based on an evolution of the at least one first signal characteristic over the time span. The determination unit 320 receives the detection data from the receiving unit 310 and uses these data for determining a presence or absence of the object. Furthermore, the data processing apparatus 250 comprises an output unit 330 for providing an output of the determination unit 420 to the control system of the vehicle and/or to a warning initiation unit triggering a warning signal, e.g. a warning sound, to warn the driver of the vehicle about the object 130.

Further, the data processing apparatus 250 comprises a data storage unit 340. The data storage unit 340 comprises a computer-readable storage medium 350 and on the computer-readable storage medium 350 a computer program 360 is provided. The computer program 360 comprises instructions which, when executed by the data processing apparatus 250 or more generally a computer, cause the computer to carry out a method for detecting an object in the surroundings of a vehicle. It is noted that in an alternative, the data storage unit 340 may be located remote, e.g. in a cloud system.

In this context, the detector array 240 may comprise one or more antennas deposited on a printed circuit board. In a case in which two or more antennas are provided, the antennas may be tuned to different frequency bands. Moreover, also in a case in which two or more antennas are provided, the antennas may have different orientations.

Figure 4 illustrates steps of a computer-implemented method for detecting an object in the surroundings of a vehicle 110 having a detector array 240 configured for detecting an electromagnetic signal and being transmitter-free. In this context, the method is configured to detect the object 130, i.e. in the present example the stone.

In a first step of the method S1, the electromagnetic signal 140, being a radar signal in the present example and the electromagnetic signal 192, being a TV broadcasting signal in the present example, are received.

As has been explained before, these electromagnetic signals 140, 192 have first signal characteristics.

The electromagnetic signals 140, 192 are received for a time span, e.g. for 1 second.

In a second step S2, a presence or absence of the object 130 is determined based on an evolution of the first signal characteristic over the time span.

It is noted that in the present example, the traffic system 100 is formed by the illuminator vehicle 120, the vehicle 110 and the stationary sender 190. It is of course also possible to have a traffic system 100 only comprising the illuminator vehicle 120 and the vehicle 110. The above explanations apply mutatis mutandis to such a traffic system 100. A further alternative traffic system 100 may only comprise the vehicle 110 and the stationary sender 190. The above explanations apply mutatis mutandis to a traffic system 100 of this kind.

It is further noted that in all of the above examples, the illuminator vehicle 120 may be considered to be representative of a plurality of illuminator vehicles.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: traffic system
- 110: vehicle
- 111: receiving unit
- 120: illuminator vehicle
- 130: object
- 140: reflected electromagnetic signal
- 150: reflected electromagnetic signal
- 160: transmitted electromagnetic signal
- 170: street
- 180: house
- 190: stationary sender
- 191: transmitted electromagnetic signal
- 192: reflected electromagnetic signal
- 193: transmitted electromagnetic signal
- 210: front of the vehicle
- 211: side of the vehicle
- 212: rear of the vehicle
- 213: roof of the vehicle
- 230: detector system
- 240: detector array
- 250: data processing unit
- 310: receiving unit
- 320: determination unit
- 330: output unit
- 340: data storage unit
- 350: computer readable medium
- 360: computer program
- S1: first step
- S2: second step

## Claims

1. A computer-implemented method for detecting an object (130) in the surroundings of a vehicle (110) having a detector array (240) configured for detecting an electromagnetic signal and being transmitter-free, comprising:
- receiving at least one electromagnetic signal (S 1) emanating from at least one stationary sender (190) and/or from at least one illuminator vehicle (120) and having at least one first signal characteristic at the detector array (240) for a time span, and
- determining a presence or absence of the object (130) (S2) based on an evolution of the at least one first signal characteristic over the time span.

2. The method according to claim 1, wherein the at least one electromagnetic signal is a radar signal, a LIDAR signal, a mobile telephone communication signal, a video broadcasting signal, a position signal, a WIFI signal or an audio broadcasting signal.

3. The method according to claim 1 or 2, wherein the at least one first characteristic of the at least one electromagnetic signal is a wavelength, a polarization, a signal strength, an autocorrelation, a cross-correlation, a frequency, an amplitude, a phase, a signal history or a travel time information.

4. The method of any one of the preceding claims, further comprising
- receiving at least two different electromagnetic signals at the detector array (240) for a time span, each electromagnetic signal having at least one first signal characteristic, and
- determining a presence or absence of the object (130) further based on an evolution of the at least one first signal characteristics of each of the at least two electromagnetic signals received over the time span.

5. The method according to any one of the preceding claims, further comprising:
- receiving a location information of a sender of the at least one electromagnetic signal, and
- determining the presence or absence of the object (130) further based on the location information.

6. The method of claim 5, further comprising:
- receiving a second signal characteristic of the at least one electromagnetic signal describing a characteristic of the electromagnetic signal at the sender, and
- determining the presence or absence of the object (130) further based on the second signal characteristic.

7. The method according to claim 6, wherein the at least one second characteristic of the at least one electromagnetic signal is a wavelength, a polarization, a signal strength, an autocorrelation, a cross-correlation, a frequency, an amplitude, a phase, a signal history or a travel time information.

8. The method according to any one of the preceding claims, further comprising
- receiving environmental parameter indicating an environmental condition having an effect on the at least one electromagnetic signal, and
- determining the presence or absence of the object (130) further based on the environmental parameter.

9. The method of any one of any one of claims 5 to 7, further comprising ignoring the electromagnetic signal if it is received on a direct path between the detector array and the sender.

10. A detector system (230) for detecting an object (130) in the surroundings of a vehicle (110), comprising a detector array (240) configured for detecting an electromagnetic signal having at least one first signal characteristic, and a data processing unit (250) being configured for determining a presence or absence of the object (130) based on an evolution of the at least one first signal characteristic over the time span,
wherein the detector array (240) and the data processing unit (250) are communicatively connected, and
wherein the detector system (230) is transmitter-free.

11. A vehicle (110) comprising a detector system (230) according to claim 9.

12. A use of a detector system (230) according to claim 9 in a vehicle (110).

13. A traffic system (100) comprising:
- at least one illuminator vehicle (120) comprising a sender being configured to emit at least one electromagnetic signal and/or at least one stationary sender (190) being configured to emit at least one electromagnetic signal, and
- at least one vehicle (110) according to claim 10.

14. A computer program (360) comprising instructions which, when the program (360) is executed by a computer, cause the computer to carry out the method of claims 1 to 8.

15. A computer-readable storage medium (350) comprising instructions which, when executed by a computer, cause the computer to carry out the method of claims 1 to 8.

## Amended claims

### Amended claims in accordance with Rule 137(2) EPC.

1. A computer-implemented method for detecting an object (130) in the surroundings of a vehicle (110) having a detector array (240) configured for detecting an electromagnetic signal and being transmitter-free, comprising:
- receiving at least one electromagnetic signal (S1) emanating from at least one stationary sender (190) and/or from at least one illuminator vehicle (120) and having at least one first signal characteristic at the detector array (240) for a time span, wherein the at least one electromagnetic signal is a LIDAR signal, and
- determining a presence or absence of the object (130) (S2) based on an evolution of the at least one first signal characteristic over the time span.

2. The method according to claim 1, wherein the at least one electromagnetic signal comprises a radar signal, , a mobile telephone communication signal, a video broadcasting signal, a position signal, a WIFI signal or an audio broadcasting signal.

3. The method according to claim 1 or 2, wherein the at least one first characteristic of the at least one electromagnetic signal is a wavelength, a polarization, a signal strength, an autocorrelation, a cross-correlation, a frequency, an amplitude, a phase, a signal history or a travel time information.

4. The method of any one of the preceding claims, further comprising
- receiving at least two different electromagnetic signals at the detector array (240) for a time span, each electromagnetic signal having at least one first signal characteristic, and
- determining a presence or absence of the object (130) further based on an evolution of the at least one first signal characteristics of each of the at least two electromagnetic signals received over the time span.

5. The method according to any one of the preceding claims, further comprising:
- receiving a location information of a sender of the at least one electromagnetic signal, and
- determining the presence or absence of the object (130) further based on the location information.

6. The method of claim 5, further comprising:
- receiving a second signal characteristic of the at least one electromagnetic signal describing a characteristic of the electromagnetic signal at the sender, and
- determining the presence or absence of the object (130) further based on the second signal characteristic.

7. The method according to claim 6, wherein the at least one second characteristic of the at least one electromagnetic signal is a wavelength, a polarization, a signal strength, an autocorrelation, a cross-correlation, a frequency, an amplitude, a phase, a signal history or a travel time information.

8. The method according to any one of the preceding claims, further comprising
- receiving environmental parameter indicating an environmental condition having an effect on the at least one electromagnetic signal, and
- determining the presence or absence of the object (130) further based on the environmental parameter.

9. The method of any one of any one of claims 5 to 7, further comprising ignoring the electromagnetic signal if it is received on a direct path between the detector array and the sender.

10. A detector system (230) for detecting an object (130) in the surroundings of a vehicle (110), comprising a detector array (240) configured for detecting an electromagnetic signal having at least one first signal characteristic, wherein the electromagnetic signal is a LIDAR signal, and a data processing unit (250) being configured for determining a presence or absence of the object (130) based on an evolution of the at least one first signal characteristic over the time span,
wherein the detector array (240) and the data processing unit (250) are communicatively connected, and
wherein the detector system (230) is transmitter-free.

11. A vehicle (110) comprising a detector system (230) according to claim 9.

12. A use of a detector system (230) according to claim 9 in a vehicle (110).

13. A traffic system (100) comprising:
- at least one illuminator vehicle (120) comprising a sender being configured to emit at least one electromagnetic signal and/or at least one stationary sender (190) being configured to emit at least one electromagnetic signal, and
- at least one vehicle (110) according to claim 10.

14. A computer program (360) comprising instructions which, when the program (360) is executed by a computer, cause the computer to carry out the method of claims 1 to 8.

15. A computer-readable storage medium (350) comprising instructions which, when executed by a computer, cause the computer to carry out the method of claims 1 to 8.
